# EUROPÄISCHE PATENTSCHRIFT

(11) **EP 1 591 386 B1**
(45) Veröffentlichungstag und Bekanntmachung des Hinweises auf die Patenterteilung: **31.12.2008**
(21) Anmeldenummer: 05006365.0
(22) Anmeldetag: 23.03.2005
(51) Int. Cl.: B65G 49/06

(54) **Berührungsfreier Plattenförderer, insbesondere für Glasplatten**
Contact-free transporting apparatus for plates, in particular for glass plates
Appareil de transport sans contact de plaques, en particulier pour des plaques de verre

(30) Priorität: 26.03.2004 DE 102004014779
(43) Veröffentlichungstag der Anmeldung: 02.11.2005
(73) Patentinhaber: Grenzebach Maschinenbau GmbH, 86663 Asbach-Bäumenheim/Hamlar (DE)
(72) Erfinder: Zeidler, Elmar, Sharpsburg Georgia 30277 (US); Vassel, Donald T., Newnan Georgia 30265 (US)
(74) Vertreter: Gallo, Wolfgang

(56) Entgegenhaltungen:
- FR-A- 1 463 191
- FR-A- 2 174 673
- GB-A- 748 138
- US-A- 3 411 830
- US-A- 3 477 764
- US-A- 4 874 273
- US-A- 4 969 676
- PATENT ABSTRACTS OF JAPAN Bd. 2000, Nr. 10, 17. November 2000 (2000-11-17) -& JP 2000 191334 A (ASAHI GLASS CO LTD), 11. Juli 2000 (2000-07-11)
- PATENT ABSTRACTS OF JAPAN Bd. 1997, Nr. 06, 30. Juni 1997 (1997-06-30) -& JP 09 052727 A (BANDO KIKO KK), 25. Februar 1997 (1997-02-25)

## Beschreibung

Bei der Floatglaserzeugung wird bekanntlich das kontinuierlich auf einem flüssigen Metallbad erzeugte und erstarrte Glasband über Plattenförderer abgefördert, die üblicherweise als Rollenförderer ausgebildet sind, über deren Rollen das Glasband mit seiner Badseite sich bewegt. Das gefertigte und abgeförderte Glasband wird, während es sich bewegt, durch Längsschneider und Querschneider zu Glastafeln bzw. Glasplatten gewünschter Formate geschnitten und diese Tafeln bzw. Platten werden ebenfalls über Plattenförderer bis zur Entnahme an Stapelstationen weiter befördert.

Durch den Kontakt mit den Rollen bei der Bewegung über die Rollenförderer erfährt das Glas an seiner entsprechenden Seite zwar nur geringfügige und normalerweise nicht wahrnehmbare Spuren, die aber bei manchen Anwendungen dennoch störend sind und die Qualität der Glasoberfläche beeinträchtigen.

Aufgabe der Erfindung ist es, einen Förderer zu schaffen, der solche durch die mechanische Berührung zwischen Glasoberfläche und Förderelementen bedingten Spuren auf der Glasoberfläche vermeidet.

Diese Aufgabe wird gemäß der Erfindung durch das im Anspruch 1 angegebene berührungsfreie Fördersystem gelöst. Vorteilhafte Ausgestaltungen der Erfindung sind Gegenstand der Unteransprüche.

Ein pneumatisches Fördern von Gegenständen, allerdings nicht das Fördern von Platten bei einem Plattenförderer, ist aus der US 3 477 764 bekannt, die eine Fördervorrichtung in Gestalt einer rechteckigen, an drei Seiten von aufragenden Seitenwänden begrenzten und nur an einer Seite offenen Wanne beschreibt, deren Boden mit einer Anordnung von Blasdüsen versehen ist, die schräg mit einer Neigung in Richtung der offenen Wannenseite verlaufen und in einer kleinen Drucklufttasche endigen.

Aus der FR 2 174 673 ist eine Vorrichtung zum Handhaben von Gegenständen bekannt, wobei es sich um eine Druckluftblasdüse mit einem sich konisch erweiternden becherförmigen Mantel und einem eingesetzten Kegelkörper handelt, der zwischen sich und dem Mangel eine schmale ringförmige Ausblasdüse bildet, durch welchen Druckluft zu dem zu haltenden Gegenstand ausgeblasen wird. Dadurch soll in dem radial innerhalb der Ringöffnung verbleibenden Zwischenraum zwischen der Vorrichtung und dem zu halternden Gegenstand ein Unterdruck erzeugt werden, der eine Saugwirkung entfaltet.

Durch eine Veröffentlichung in "Design News" vom 09.08.2003, Seite 90, ist ein ähnlicher berührungsfrei arbeitender Sauger bekannt geworden. Dieser Sauger weist einen Saugnapf in Gestalt eines konischen Bechers mit ausreichend großem Kegelwinkel auf, bei welchem Druckluft in Gestalt eines Luftfilms aus einer entsprechend geformten Düse über die Becherwandfläche nach außen geblasen wird. Dieser ausgeblasene Luftfilm bildet zwischen dem Umfang des Saugnapfs und der Oberfläche eines durch Saugkraft zu haltenden Objekts einen dünnen, radial nach außen strömenden Luftfilm, wodurch ein dünner Luftspalt zwischen dem Saugnapf und dem durch Saugkraft gehaltenen Teil aufrecht erhalten wird. Die Saugkraft entsteht dadurch, dass im Trichterinnenraum des konischen Bechers ein Unterdruck entsteht, der die Saugkraft erzeugt. Auf diese Weise kann also die bekannte Anordnung berührungsfrei einen Gegenstand durch Saugkraft festhalten.

Die vorliegende Erfindung macht sich dieses Prinzip zunutze und bildet es weiter aus, um einen berührungsfreien Plattenförderer zu schaffen. Damit können zu fördernde Glasplatten (oder andere Platten) sowohl an ihrer Unterseite unterstützt und gleichzeitig befördert werden, als auch saugend an ihrer Oberseite gehalten und gleichzeitig transportiert werden.

Bei dem erfindungsgemäßen Förderer gleiten die Platten berührungsfrei über die Saugdüsenmatrix des Förderers. Der Plattenvorschub kann dabei durch Schwerkraft erzeugt werden, indem der Förderer ein leichtes Gefälle aufweist, da fast keine Reibung vorhanden ist. Ein Vorschub kann aber auch dadurch erzeugt werden, dass die Saugdüsenbecher statt einer geraden Kreiskegelform die Gestalt eines schiefen Kreiskegels oder eine andere, den Zweck besonders angepasste Form haben, derart, dass statt eines allseitig radial etwa gleichmäßig austretenden Glasluftfilms der Luftfilm eine starke resultierende Richtungskomponente in Plattenförderrichtung hat und alle Saugdüsen der Saugdüsenmatrix zusammen so eine Vorschubkraftkomponente auf die Platten ausüben.

Die oben erwähnte andere Form der Blasdüsen kann beispielsweise eine Saugdüsenform sein, die etwa rechteckig ist, aber asymmetrisch mit in Förderrichtung flacherer konischer Bandfläche, so dass ein deutlich größerer Teil des Blasluftstroms in Förderrichtung strömt.

Die Erfindung wird nachstehend unter Bezugnahme auf die anliegenden Zeichnungen und anhand von Ausführungsbeispielen mehr im einzelnen erläutert. In den Zeichnungen zeigt:

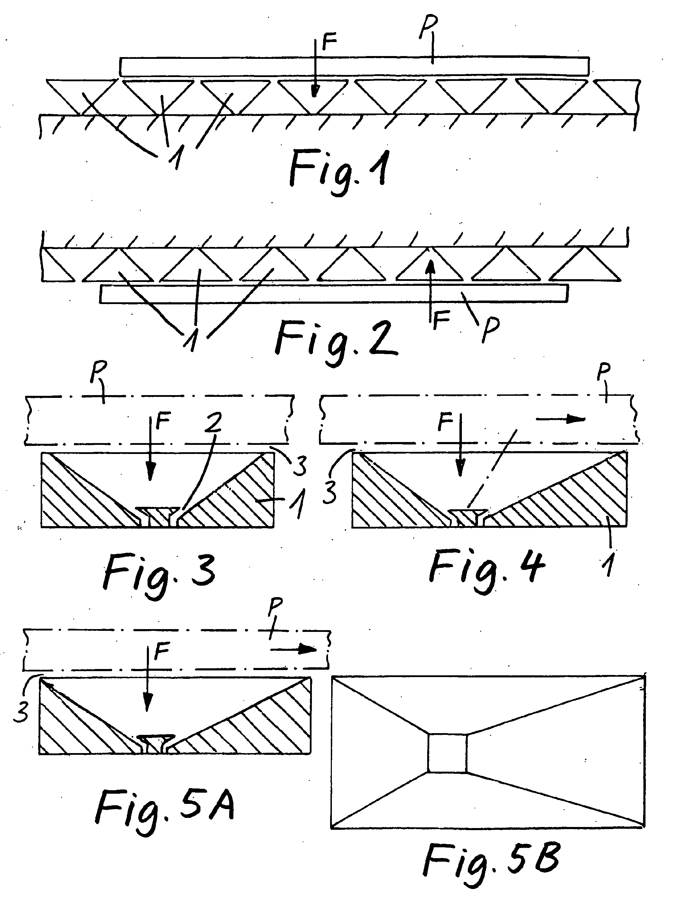

- Fig. 1: in schematischer Seitenansicht das Bauprinzip eines Plattenförderers nach der Erfindung,
- Fig. 1: in schematischer Seitenansicht das Bauprinzip eines Plattenförderers nach der Erfindung ähnlich Fig. 1, jedoch für hängenden Plattentransport,
- Fig. 3: einen schematischen Schnitt durch eine Saugdüse des Plattenförderers,
- Fig. 4: einen schematischen Schnitt durch eine modifizierte Saugdüse zur Erzeugung einer auf die Platte wirkenden Richtungskomponente, und
- die Fig. 5A und 5B: einen schematischen Schnitt und eine Draufsicht auf eine weiter modifizierte Blasdüse zur Erzeugung einer Richtungskomponente.

Die Figuren 1 und 2 zeigen jeweils eine schematische Seitenansicht des Bauprinzips eines Plattenförderers nach der Erfindung, bestehend aus einer matrixartigen Anordnung von Saugdüsen 1 zur berührungsfreien liegenden (Fig. 1) bzw. hängenden (Fig. 2) Förderung von Glasplatten oder anderen Platten. Die Saugdüsenmatrix umfaxt eine Vielzahl von jeweils Druckluftgespeisten Saugdüsen 1, die in zweckmäßiger feldartiger Anordnung über die Breite und in Längsrichtung des Förderers verteilt angeordnet sind. Gegebenenfalls kann die Saugdüsenmatrix in mehrere parallele streifenförmige und jeweils nur einen Teil de Breite des Förderers überdeckende Felder aufgeteilt sein, die jeweils gesondert druckluftbeaufschlagt sind, damit der Förderer mit Platten wirtschaftlich betrieben werden kann, die nicht der vollen Breite des Förderers entsprechen.

Figur 3 zeigt einen schematischen Schnitt durch eine Saugdüse 1. Sie hat eine kegelige Becherform in Gestalt eines geraden Kreiskegels mit großem Kegelwinkel. Durch eine ringförmige Schlitzdüse 2 im Scheitelbereich der Saugdüse 1 wird Druckluft in Gestalt eines Luftfilms über die konische Becherwand geblasen. Diese Druckluft tritt in Gestalt eines dünnen Luftfilms durch einen dünnen Spalt 3 zwischen dem Rand der Saugdüse 1 und einer beförderten Platte P radial nach außen aus, wobei zugleich im inneren Kegelraum der Saugdüse ein Unterdruck und dadurch eine Saugkraft F erzeugt wird.

Fig 4 zeigt einen schematischen Schnitt durch eine Saugdüse 1 ähnlich Fig. 3, jedoch mit dem Unterschied, dass hier die Saugdüse mit ihrer Becherform dahingehend modifiziert ist, dass sie nunmehr statt einer geraden Kreiskegelform die Gestalt eines schrägen Kreiskegels hat. Die Achse dieses schrägen Kreiskegels bildet mit der Oberfläche der beförderten Platte P einen spitzen Winkel, der in Förderrichtung des Plattenförderers zeigt. Die insgesamt am Rand der Saugdüse zwischen dieser und der Platte P austretende Luftströmung ist also nicht drehsymmetrisch um die Düsenachse gleichmäßig verteilt, sondern hat eine resultierende Massen- und Geschwindigkeitskomponente, die in Förderrichtung weist und damit über die, wenn auch geringe Reibung mit der Plattenoberfläche eine Vorschubkomponente auf die Platte P ausübt.

Die in den Fig. 5A und 5B schematisch im Schnitt und in Draufsicht gezeigte weiter modifizierte Düse ist in ihrer Wirkung und ihrer prinzipiellen Gestaltung ähnlich derjenigen nach Fig. 4, jedoch hat sie keine Kegelform, sondern eine Rechteckform, und erzeugt ebenso wie die Düse nach Fig. 4 eine Vorschubkomponente auf die Platte P.

## Patentansprüche

1. Berührungslos arbeitender Plattenforderer, insbesondere für Glasplatten, mit einer eine Förderbahn bildenden flächigen Anordnung von Saugdusen (1), die jeweils eine sich nach außen konisch stark erweiternde Becherform haben, und wobei über eine Schlitzdüse (2) nur über die Becherinnenwandflächen ein Druckluftfilm ausgeblasen wird.

2. Plattenförderer nach Anspruch 1, wobei die Becherform der Düsen (1) jeweils einem schrägen Kreiskegel entspricht, dessen Achse mit Bezug auf die Oberfläche der zu fordernden Platten (P) geneigt ist und damit einen in die Plattenförderrichtung weisenden spitzen Winkel bildet.

3. Plattenförderer nach Anspruch 1, wobei die Becherform einer schrägen Rechteckpyramidenform entspricht, deren Achse mit Bezug auf die Oberfläche der zu fördernden Platten (P) geneigt ist und damit einen in Plattenförderrichtung weisenden spitzen Winkel bildet.

4. Plattenförderer nach Anspruch 1, wobei die Becherform der Düsen (1) etwa rechteckig ist, wobei eine Rechteckachse parallel zur Förderrichtung der Platten (P) verläuft, und wobei die der in Förderrichtung der Platten (P) weisende Wandfläche der Becherform wesentlich flacher geneigt ist als die anderen Becherwandflächer.

5. Plattenförderer nach einem der Ansprüche 1 bis 4, wobei die Düsen (1) nach oben ausmünden und die zu fördernden Platten (P) an ihren Unterseiten tragen.

6. Plattenförderer nach einem der Ansprüche 1 bis 4, wobei die Düsen (1) nach unten ausmünden und die zu fördernden Platten durch die von den Düsen (1) erzeugte Saugkraft hängend tragen.

7. Plattenförderer nach einem der Ansprüche 1 bis 6, wobei die Düsenauslassebene, in welcher die Düsen (1) ausmünden, in Förderrichtung schwach geneigt ist.

## Claims

1. Contactlessly operating plate conveyor, in particular for plate glass, comprising a conveyor-belt formed by a planar arrangement of suction nozzles (1), which each have an outwardly widely flaring cup shape, and wherein through a slotted nozzle (2) a compressed-air film is blown out only over the cup inner wall surfaces.

2. Plate conveyor according to claim 1, wherein the cup shape of the nozzles (1) corresponds in each case to an oblique circular cone, the axis of which is inclined in relation to the surface of the plates (P) to be conveyed and forms therewith an acute angle oriented in the plate conveying direction.

3. Plate conveyor according to claim 1, wherein the cup shape corresponds to an oblique rectangular pyramid shape, the axis of which is inclined in relation to the surface of the plates (P) to be conveyed and forms therewith an acute angle oriented in plate conveying direction.

4. Plate conveyor according to claim 1, wherein the cup shape of the nozzles (1) is approximately rectangular, wherein a rectangle axis extends parallel to the conveying direction of the plates (P), and wherein the wall surface of the cup shape oriented in conveying direction of the plates (P) is much less steeply inclined than the other cup wall surfaces.

5. Plate conveyor according to one of claims 1 to 4, wherein the nozzles (1) open out in an upward direction and carry the plates (P) to be conveyed at the undersides thereof.

6. Plate conveyor according to one of claims 1 to 4, wherein the nozzles (1) open out in a downward direction and carry the plates to be conveyed suspended by means of the suction force generated by the nozzles (1).

7. Plate conveyor according to one of claims 1 to 6, wherein the nozzle outlet plane, in which the nozzles (1) open out, is inclined slightly in conveying direction.

## Revendications

1. Transporteur de plaques fonctionnant sans contact, en particulier pour plaques de verre, comportant un agencement plan de buses d'aspiration (1) formant une voie de transport, lesdites buses d'aspiration ayant chacune une forme de godet s'élargissant fortement en forme de cône vers l'extérieur, et un film d'air comprimé étant soufflé uniquement sur les surfaces de parois intérieures de godet par l'intermédiaire d'une buse à fente (2).

2. Transporteur de plaques selon la revendication 1, dans lequel la forme de godet de chacune des buses (1) correspond à un cône de révolution oblique dont l'axe est incliné par rapport à la surface des plaques (P) à transporter et forme avec celle-ci un angle aigu regardant dans la direction de transport des plaques.

3. Transporteur de plaques selon la revendication 1, dans lequel la forme de godet correspond à une pyramide oblique de base rectangulaire dont l'axe est incliné par rapport à la surface des plaques (P) à transporter et forme avec celle-ci un angle aigu regardant dans la direction de transport des plaques.

4. Transporteur de plaques selon la revendication 1, dans lequel la forme de godet des buses (1) est à peu près rectangulaire, un axe du rectangle s'étendant parallèlement à la direction de transport des plaques (P) et la surface de paroi de la forme de godet regardant dans la direction de transport des plaques (P) étant inclinée de manière sensiblement plus plate que les autres surfaces de paroi du godet.

5. Transporteur de plaques selon l'une quelconque des revendications 1 à 4, dans lequel les buses (1) débouchent vers le haut et portent les plaques (P) à transporter sur leur face inférieure.

6. Transporteur de plaques selon l'une quelconque des revendications 1 à 4, dans lequel les buses (1) débouchent vers le bas et portent les plaques à transporter de manière suspendue par la force d'aspiration produite par les buses (1).

7. Transporteur de plaques selon l'une quelconque des revendications 1 à 6, dans lequel le plan de sortie des buses, dans lequel les buses (1) débouchent, est faiblement incliné dans la direction de transport.
